# EUROPEAN PATENT APPLICATION

(11) **EP 4 841 630 A1**
(43) Date of publication of application: **18.11.2026**
(21) Application number: 26178790.7
(22) Date of filing: 14.05.2026
(51) Int. Cl.: G10L 25/63, A01K 27/00

(54) **COMMUNICATION IN ANIMALS WITH PERSONALIZED RESPONSES CONSIDERING SOCIAL COMPATIBILITY AND GROUP COHESION**

(30) Priority: 16.05.2025 IN 202521047155
(71) Applicant: Tata Consultancy Services Limited, Maharashtra (IN)
(72) Inventor: PATIL, Ruturaj Nivas, 411057 Pune, Maharashtra (IN); BALASUBRAMANIAN, Hemavathy, 600113 Chennai, Tamil Nadu (IN); MOHITE, Jayantrao, 400601 Thane (West), Maharashtra (IN); SINGH, Dineshkumar Jang Bahadur, 400601 Thane (West), Maharashtra (IN); SARANGI, Sanat, 400601 Thane (West), Maharashtra (IN); PATIL, Anil Himmatrao, 400601 Thane (West), Maharashtra (IN); LONKAR, Vaibhav Sadashiv, London, EC2N 4BQ (GB); PAPPULA, Srinivasu, 500081 Hyderabad, Telangana (IN)
(74) Representative: Goddar, Heinz J.

(57) **Abstract**

This disclosure relates generally to a method and system for communication in animals with personalized responses considering social compatibility and group cohesion. Current available methods focus on GPS based tracking and single data source for animal social interaction. The disclosed method determines emotion of animal using animal historical data. The method leverages GenAI model to generate personalized speech responses to emotionally interact with animals. The method determines a social compatibility score (SCS) which indicates social- emotional dynamics between animals in the same species group and different species group. The method also determines a group cohesion score (GCS) which indicates emotional harmony and cohesion between animals in the same species and different species. SCS and GCS are utilized to determine resilience score indicating the ability of each animal to recover from negative emotion. Based on the resilience score, insights including personalized care plans are generated to provide for the animal.

## Description

### CROSS-REFERENCE TO RELATED APPLICATIONS AND PRIORITY

The present application claims priority to Indian application no. 202521047155, filed on May 16, 2025.

### TECHNICAL FIELD

The disclosure herein generally relates to animal communication with personalized responses, and, more particularly, to a method and system for communication in animals with personalized responses considering social compatibility and group cohesion.

### BACKGROUND

Animal emotion detection technology improves animal care by monitoring stress and well-being in pets, livestock, and wildlife. It enhances training, customizes pet products, and optimizes human-animal interactions, including with therapy of animals. It also aids in livestock management and supports conservation efforts. When studying cattle emotions, it is crucial to understand how to recognize and interpret their emotional states.

Unlike humans who can communicate emotions verbally, interpreting cattle emotions can be complex. Existing methods focus on Global Positioning System (GPS)-based tracking and social network integration to monitor a companion animal's location and events, enabling real-time tracking and interaction notifications between the animal and its owner. Existing methods employ only image processing and data analysis to track animal movements and social behaviors in a controlled environment, generating dynamic social network descriptions for animal interactions. Also, existing methods rely on single data sources such as vocalizations, video data, facial or biometric data etc., which are species-specific and limited in capturing the full spectrum of an animal's emotional state.

### SUMMARY

Embodiments of the present disclosure present technological improvements as solutions to one or more of the above-mentioned technical problems recognized by the inventors in conventional systems. For example, in one embodiment, a method for communication in animals with personalized responses considering social compatibility and group cohesion is provided. The method includes determining an emotion of an animal from a multimodal input data captured using a plurality of sensors, using a trained Graph Neural Network (GNN)-transformer model. The multimodal input data comprises an audio data, a video data, and Internet of Things (IoT) data comprising a physiological data and an environmental data. Further the method includes, generating a set of speech responses by converting a plurality of contextual text responses obtained based on (i) the emotion of the animal, (ii) a profile corresponding to the animal, (iii) a species specific communication data obtained from an experimental data, (iv) the environmental data, and (v) a response data from (a) other animals and (b) owners of other animals. This is done by using a Generative Artificial Intelligence (GenAI) model to record an interaction of the animal which comprises at least (i) a positive interaction, or (ii) a negative interaction. Furthermore, the method includes, determining a social compatibility score (SCS) indicating one or more emotional-social dynamics between a plurality of animals in (i) an intra species social group, and (ii) an inter species social group, over a predefined time period. The SCS is determined based on a number of interactions of the plurality of animals, a number of positive interactions of the plurality of animals, a number of negative interactions of the plurality of animals, a number of emotional match responses, and one or more stress indicators during interactions. Then the method includes, determining a group cohesion score (GCS) indicating an emotional harmony and a cohesion between the plurality of animals (i) in the intra species social group, and (ii) in the inter species social group. The GCS is determined based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time. Further the method includes, generating a resilience score for each animal amongst the plurality of animals in (i) the intra species social group, and (ii) the inter species social group indicating ability of each animal to recover from a negative emotion. The resilience score is determined utilizing (i) a recovery time indicating time required for each animal to return to a predefined emotion, (ii) a response strength depending on at least one speech response amongst the set of speech responses which causes an emotion of each animal to return to the predefined emotion, (iii) a number of speech responses required for the emotion of each animal to return to the predefined emotion, and (iv) a number of negative emotions experienced by each animal. Finally, the method includes generating a set of predefined insights for each animal in (i) the intra species social group, and (ii) the inter species social group based on the resilience score.

In another aspect, a system for communication in animals with personalized responses considering social compatibility and group cohesion is provided. The system comprises memory storing instructions; one or more communication interfaces; and one or more hardware processors coupled to the memory via the one or more communication interfaces, wherein the one or more hardware processors are configured by the instructions to determine an emotion of an animal from a multimodal input data captured using a plurality of sensors, using a trained Graph Neural Network (GNN)-transformer model. The multimodal input data comprises an audio data, a video data, and IoT data comprising a physiological data and an environmental data. Further the system includes, generating a set of speech responses by converting a plurality of contextual text responses obtained based on (i) the emotion of the animal, (ii) a profile corresponding to the animal, (iii) a species-specific communication data, (iv) the environmental data, and (v) a response data from (a) other animals and (b) other owners. This is done by using a Generative Artificial Intelligence (GenAI) model to record an interaction of the animal which comprises at least (i) a positive interaction, or (ii) a negative interaction. Furthermore, the system includes, determining a Social Compatibility Score (SCS) indicating one or more emotional-social dynamics between a plurality of animals in (i) an intra species social group, and (ii) an inter species social group, over a predefined time period. The SCS is determined based on a number of interactions of the plurality of animals, a number of positive interactions of the plurality of animals, a number of negative interactions of the plurality of animals, a number of emotional match responses, and one or more stress indicators during interactions. Then the system includes, determining a Group Cohesion Score (GCS) indicating an emotional harmony and a cohesion between the plurality of animals (i) in the intra species social group, and (ii) in the inter species social group. The GCS is determined based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time. Further the system includes, generating a resilience score for each animal amongst the plurality of animals in (i) the intra species social group, and (ii) the inter species social group indicating ability of each animal to recover from a negative emotion. The resilience score is determined utilizing (i) a recovery time indicating time required for each animal to return to a predefined emotion, (ii) a response strength depending on at least one speech response amongst the set of speech responses which causes the emotion of each animal to return to the predefined emotion, (iii) a number of speech responses required for the emotion of each animal to return to the predefined emotion, and (iv) a number of negative emotions experienced by each animal. Finally, the system includes, generating a set of predefined insights for each animal in (i) the intra species social group, and (ii) the inter species social group based on the resilience score.

In yet another aspect, there is provided a computer program product comprising a non-transitory computer readable medium having a computer readable program embodied therein, wherein the computer readable program, when executed on a computing device causes the computing device for communication in animals with personalized responses considering social compatibility and group cohesion is provided. The computer readable program includes determining an emotion of an animal from a multimodal input data captured using a plurality of sensors, using a trained Graph Neural Network (GNN)-transformer model. The multimodal input data comprises an audio data, a video data, and Internet of Things (IoT) data comprising a physiological data and an environmental data. Further the computer readable program includes, generating a set of speech responses by converting a plurality of contextual text responses obtained based on (i) the emotion of the animal, (ii) a profile corresponding to the animal, (iii) a species specific communication data, (iv) the environmental data, and (v) a response data from (a) other animals and (b) other owners. This is done by using a Generative Artificial Intelligence (GenAI) model to record an interaction of the animal which comprises at least (i) a positive interaction, or (ii) a negative interaction. Furthermore, the computer readable program includes, determining a Social Compatibility Score (SCS) indicating one or more emotional-social dynamics between a plurality of animals in (i) an intra species social group, and (ii) an inter species social group, over a predefined time period. The SCS is determined based on a number of interactions of the plurality of animals, a number of positive interactions of the plurality of animals, a number of negative interactions of the plurality of animals, a number of emotional match responses, and one or more stress indicators during interactions. Then the computer readable program includes, determining a Group Cohesion Score (GCS) indicating an emotional harmony and a cohesion between the plurality of animals (i) in the intra species social group, and (ii) in the inter species social group. The GCS is determined based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time. Further the computer readable program includes, generating a resilience score for each animal amongst the plurality of animals in (i) the intra species social group, and (ii) the inter species social group indicating ability of each animal to recover from a negative emotion. The resilience score is determined utilizing (i) a recovery time indicating time required for each animal to return to a predefined emotion, (ii) a response strength depending on at least one speech response amongst the set of speech responses which causes the emotion of each animal to return to the predefined emotion, (iii) a number of speech responses required for the emotion of each animal to return to the predefined emotion, and (iv) a number of negative emotions experienced by each animal. Finally, the computer readable program includes, generating a set of predefined insights for each animal in (i) the intra species social group, and (ii) the inter species social group based on the resilience score.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for communication in animals with personalized responses considering social compatibility and group cohesion according to some embodiments of the present disclosure.
FIG. 2 is an exemplary flow diagram illustrating a method for communication in animals with personalized responses considering social compatibility and group cohesion according to some embodiments of the present disclosure.
FIG. 3 is a block diagram depicting the steps on generating a set of speech responses by converting contextual text responses corresponding to an animal according to some embodiments of the present disclosure.
FIG. 4 illustrates an example user interface showing a social network of animals according to some embodiments of the present disclosure.
FIG. 5 illustrates an example user interface showing red activity monitoring of an animal according to some embodiments of the present disclosure.
FIG. 6 illustrates an example user interface showing a calf and mother interaction according to some embodiments of the present disclosure.
FIG. 7 illustrates an example user interface showing an intra species group and an inter species group according to some embodiments of the present disclosure.
FIG. 8 illustrates an example user interface showing the intra species group of cows with text responses according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The disclosed method addresses the challenge of understanding and managing animals' emotional states in real-time to reduce stress, anxiety, and behavioral issues. The method disclosed addresses the challenge of helping/assisting animal owners provide personalized care and interventions based on the emotional needs of their pets or livestock, improving their quality of life without the need of their physical presence with their pets all the time. Improving interactions within and across species, especially in multi-animal households or farms, by monitoring and fostering emotional bonds to reduce conflict and stress is also a challenge in the field of animal emotional monitoring and animal social interaction. Real time emotional monitoring and offering real time insights and interventions for animal care takers so that they promptly respond to emotional distress or changes in animal behavior is another challenge in animal emotional monitoring and animal social interaction.

Existing approaches typically focus on single data sources (e.g., physiological data or audio data). There is no current solution that combines audio data, video data, Internet of Things (IoT) sensor data, and physiological data in a holistic, real-time emotional detection and response system. There are no current systems that can personalize responses based on the emotional state, and individual history of the animal in a dynamic, evolving manner. Current solutions do not optimize cross-species emotional bonding or communication in a quantifiable manner. Existing systems lack the ability to automate emotional interventions based on past emotional trends and resilience, failing to predict and respond to recurring emotional patterns effectively.

Embodiments of the present disclosure use Generative Artificial Intelligence (GenAI) model(s) to generate personalized emotional responses based on an animal's profile. The GenAI model learns from an animal's historical emotional data to generate emotional expressions that align with the animal's past emotional states and the specific context of the current interaction. This allows the system to generate highly personalized, contextually rich emotional expressions. The GenAI model adapts to the animal's evolving emotional profile, refining its responses over time. The disclosed system captures real-time data from audio, video, and physiological sensors, which continuously monitor the animal's emotional state. This allows the system to analyze and respond immediately to shifts in emotional state, generating timely interventions (e.g., soothing audio, comforting speech, or owner presence) as required. Moreover, the system learns from ongoing emotional feedback and adapts its future responses, making it capable of adjusting in real-time to the animal's emotional shifts and needs. The disclosed method determines species-specific emotional responses and cross-species emotional communication. The system tracks emotional cues from different species and assesses how one species (e.g., a dog) reacts to the emotional signals of another species (e.g., a cat). The method of the present disclosure then generates customized responses, ensuring that animals not only interact emotionally within their species but can also form positive bonds with other species. The system monitors these cross-species interactions, ensuring compatibility and emotional safety in shared spaces. The system also determines a social compatibility score (SCS) which indicates social- emotional dynamics between animals in the same species and different species. The SCS is determined using positive and negative interactions between the animals, emotional responses of the animals and stress indicators during interactions between the animals. The system also determines a group cohesion score (GCS) which indicates emotional harmony and cohesion between animals in the same species and different species. The GCS is determined from the stress level of animals, and social behavior of the animals. The SCS helps in tracking animals' emotion during group interactions whereas the GCS helps in ensuring that the emotional states of animals in the group remain balanced and non-distressed, allowing for a harmonious social environment. Further a resilience score indicating the ability of each animal to recover from negative emotion is determined. Based on the resilience score, insights including personalized care plans are generated to provide to the animal.

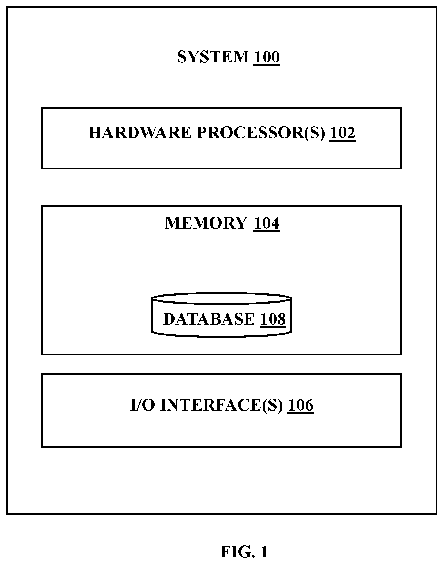

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary block diagram of a system for communication in animals with personalized responses considering social compatibility and group cohesion according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules. Further, the plurality of modules includes programs or coded instructions that supplement applications or functions performed by the system 100 for executing different steps involved in the process for communication in animals by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof.

Further, the memory 104 includes a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database includes experimental data, animal profile data with profile corresponding to the animal, predefined insights for care plan etc.

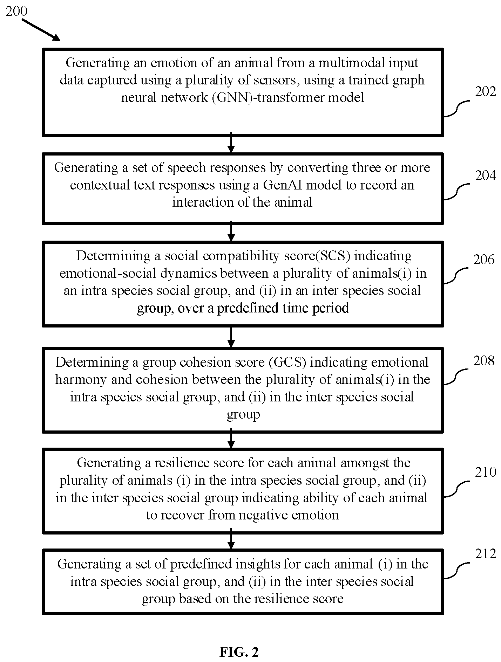

FIG.2 is an exemplary flow diagram illustrating a method for communication in animals with personalized responses considering social compatibility and group cohesion according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1, and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of the method 200, one or more hardware processors 102 are configured to determine an emotion of an animal from a multimodal input data captured using a plurality of sensors. The emotion is determined using a trained Graph Neural Network (GNN)-transformer model. The method for determining the emotion of the animal is disclosed in Indian patent application 202521014089. Here the said method for generating animal emotion initially generates an animal emotion knowledge graph (AEKG) that combines human and animal neurobiological data, behavioural studies, and the human wheel of emotions. The AEKG is used for training the GNN-transformer model. Further real time graphs are generated from the multimodal input data captured from the animal. These real time graphs are used for predicting emotion of the animal using the trained GNN-Transformer model. The multimodal input data comprises an audio data, a video data, and IoT data comprising a physiological data and an environmental data. The system 100 captures real-time data from audio, video, and physiological sensors, which continuously monitor the animal's emotional state. The phrases "emotion" and "emotional state" may be interchangeably used in the present disclosure.

Using the detected short-term emotion and contextual factors from the animal's multimodal input data, the Generative AI (GenAI) model then generates a personalized expression that best reflects the emotional state of the animal along with the emoticon (Emotion Icon) for an immediate understanding. The personalized expression can be a text, an image, a video or an audio expression. The text, image, audio and video expression are helpful for the "humans" (e.g., owner, veterinary doctor, etc.), whereas image, video and audio expression are useful for animal too, if displayed on a screen next to animal. Predefined mapping of emotions to their corresponding emoticons is used to generate the emoticon. A mood icon based on mood of the day is also generated using a deep learning model such as but not limited to recurrent neural network (RNN) or a long short-term memory network (LSTM) to provide a broader view of the animal's emotional trend over time. The deep learning model is trained using the multi-modal input data received from animals. The system 100 generates and stores this "mood of the day" for the animal, assisting owners to keep track of daily emotional shifts and identify any sudden emotional changes.

The system 100 leverages historical data from the specific animal to personalize its emotional expressions.
For example (personalized textual expression):
If an aggressive animal is detected to be in distress, the GenAI model generates a more forceful and assertive textual expression, such as:
"I'm feeling threatened, back off! I don't want trouble."
For a calmer animal, the GenAI model generates more gentle and soothing expressions:
"Something's bothering me, I need some quiet time."
For a shy animal, the GenAI model generates more hesitant or submissive expression:
"I'm scared... please don't leave me alone."
The system 100 learns and refines its ability to generate textual expressions over time. As the animal's emotional states and responses evolve, the GenAI model adapts to reflect those changes. New interactions between the animal and its environment, owner, or other animals can also refine how the system generates these emotional expressions. If an animal is exposed to new stimuli (e.g., a new pet, new location, or new routine), the GenAI model adapts by analyzing the emotional changes in context with those stimuli.

Further at step 204 of the method 200, one or more hardware processors 102 are configured to generate a set of speech responses by converting a plurality of contextual text responses using the GenAI model. Further an interaction of the animal is recorded. The interaction can be a positive interaction or a negative interaction. Positive interaction means the animal responds positively to the speech response provided i.e. the animal becomes calm. The negative interaction means the animal negatively responds to the speech response, i.e., the animal becomes angry or irritated. A neutral interaction is considered as the negative interaction. The plurality of contextual responses is generated based on (i) the emotion of the animal, (ii) a profile corresponding to the animal, (iii) a species specific communication data, (iv) the environmental data, and (v) a response data from (a) other animals and (b) owners of other animals. The plurality of contextual text responses are generated using the GenAI model with fine-tuning the response for the specific animal, an associated emotional state, and the contextual situation. The GenAI model considers,
The profile corresponding to the animal: This contains known preferences, past responses, and the emotional history of the animal.
Real-time feedback: This includes analysis of the animal's immediate reaction to the environment, detected emotions, or any external stimuli like other animal approaching, person approaching etc., in physical mode
Species-specific communication data: The GenAI model understands how different species communicate (e.g., how dogs react to vocal tones versus cats, or how cows may react to sound frequencies). Each time the GenAI model is refined, the species-specific communication data is captured as experimental data and stored in the database 108. Environmental data: This includes many factors such as noise, new people, other animals, etc., influencing the animal's emotional state.
Data from other animals: The system 100 also incorporates successful response data from other animals and owners of other animals who have faced similar emotional states. This can help the system 100 offer responses that have worked in similar situations with other animals, increasing the likelihood of success in calming or engaging the animal. Instead of a simple "calm down" message, the system 100 generates detailed and contextually rich emotional expressions like:
   "It's okay, you're safe. Relax, let the tension go. Breathe with me."
   "I know you're scared. I'll stay with you. You can trust me."
   "It's alright. I'm here. Calm down with me, let's take it slow."

The generated plurality of text responses is then converted to speech using a speech synthesis (using Variational Autoencoders (VAEs) based on Generative Adversarial Network (GAN)-based models, Resemble.AI or Descript Overdub models, etc.) model that produce sounds that match the sex, or emotional tone of the caretaker. This step involves several layers such as,
Animal voice: The speech synthesis model synthesizes a response in the same species voice, matching the emotion type (e.g., a soothing cow's sound for a cow in distress). Counterpart sex or species voice: The speech synthesis model use the voice of the opposite sex of the same species or a counterpart species voice that the animal may find familiar or soothing. For instance:
   A female dog's voice to calm a male dog.
   A cat's voice to soothe a cow (if they have shared interactions before).
Human caretaker's voice: The speech synthesis model generates a human voice response especially useful for animals that are more attached to their owners. The plurality of contextual text responses are directly used as caretaker's voice or caretaker can enter custom text if he is present.
Robot or dummy caretakers/animals: In certain scenarios, where human intervention is not immediate or the animal may respond better to physical presence, robotic caretakers or dummy animals can be deployed. These robotic caretakers or dummy animals are configured to mimic calming body language, presence, or behaviors of a real caretaker or a compatible animal species, helping to further soothe the distressed animal. For example, a robot dog could be placed to calm a distressed dog, or a dummy cow could be used to comfort a nervous cow.

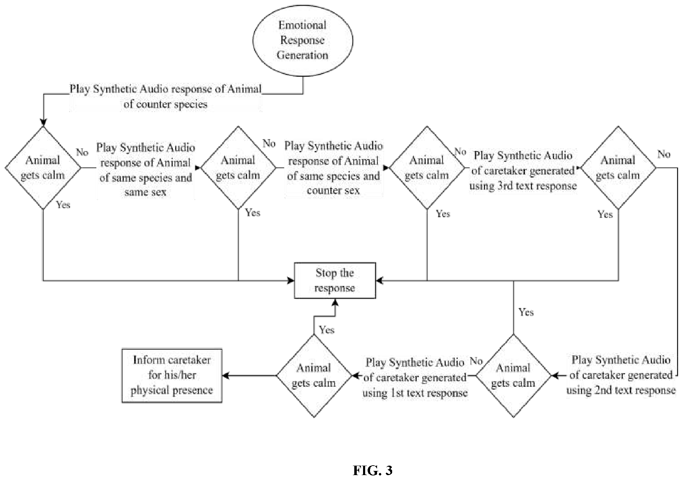

The speech responses are generated in the below order,
Audio of animal (other species)
Audio of animal (same sex, same species)
Audio of animal (opposite sex, same species)
Audio of caretaker generated using 3rd text response
Audio of caretaker generated using 2nd text response
Audio of caretaker generated using 1st text response
If the first speech response calms the animal, then the speech responses are terminated. If the animal is still in a negative emotion state, a second speech response is generated and played, and so on. If the animal is still in negative emotion state after nth speech response, the caretaker is informed for his/her physical presence. FIG. 3 is a block diagram depicting the steps on generating the set of speech responses by converting contextual text responses corresponding to an animal according to some embodiments of the present disclosure. The speech synthesis can also incorporate intonation, pitch, cadence, and emotionally appropriate sound frequencies, ensuring that the generated sound closely matches the animal's emotional needs (calm, authoritative, comforting).

If the animal consistently experiences negative emotions or distress over time (as detected through ongoing monitoring), the owner sets a pre-defined time interval to automatically trigger calming or emotional responses based on the animal's emotional history. This is helpful for animals that tend to experience recurring emotional distress (e.g., anxiety, fear, agitation, and so on).

The system 100 is reconfigurable and personalized to repeat soothing speech responses at specific pre-defined time intervals, such as hourly or after a duration of distress, to prevent escalation and provide ongoing comfort. For example, if a dog tends to become anxious in the afternoon, the owner could set the system to trigger soothing sounds or words at regular intervals (e.g., every 30 minutes) to keep the animal calm throughout the day.

The system 100 also considers the animal's emotional patterns over time (predefined emotional pattern), identifying recurring emotional triggers (e.g., stress during certain activities or times of day). Based on this data, the system 100 automatically triggers a predefined calming responses (e.g., nature sounds, specific phrases, or comforting actions) at the times when the animal is most likely to experience distress, thereby preventing the escalation of negative emotions. For instance, if an animal is prone to separation anxiety when the owner leaves the house, the system can automatically start a calming response just before the owner's departure time. The system 100 continuously adapts to the animal's emotional history, recording patterns of successful and unsuccessful responses. This ongoing learning process allows the system 100 to fine-tune the timing and content of the automatically triggered emotional responses, making them more effective over time. For example, if the system 100 detects that a certain soothing sound works well to calm the animal during stressful periods, it can be scheduled to play at one or more predefined intervals without further input from the owner. The animal's reaction to the generated speech response is then continuously monitored using audio, video, and physiological data to assess the effectiveness of the emotional response:
Successful feedback: If the animal's emotional state improves (e.g., distress decreases, relaxation begins), the system 100 records this and updates the emotional response database to improve future predictions.
Behavioral cues: If the animal calms down, the system 100 records/stores the specific speech synthesis characteristics (e.g., tone, word choice, and voice type) that were effective in the memory 104 or the database 108.
Negative feedback: If the animal does not respond positively (e.g., it remains agitated, more aggressive), the system 100 generates an escalated speech response, which is:
   (i) A stronger emotional tone from the same species' voice or the owner's voice (e.g., "No, stop! You're okay. I'm right here, relax").
   (ii) It triggers a human escalation if the system detects persistent distress (e.g., notifying the owner to check on the animal immediately, or escalate care).

Every emotional interaction (successful or unsuccessful) contributes to a growing database of responses, which is analyzed to determine which voice types, phrases, and speech synthesis styles work best for the animal and also to refine responses. i.e., continuously adapt the emotional response predictions and the GenAI model to deliver one or more refined, personalized, and effective responses.

Once the speech responses are generated, at step 206 of the method 200, one or more hardware processors 102 are configured to determine a social compatibility score (SCS) between a plurality of animals (i) in an intra species (same species) social group, and (ii) in an inter species social group, over a predefined time period. The SCS is determined based on number of interactions of the plurality of animals, number of positive interactions of the plurality of animals, number of negative interactions of the plurality of animals, number of emotional match responses, stress indicators during interactions. The SCS between the plurality of animals indicate emotional-social dynamics.

Clusters are created where animals of the same species are grouped. These clusters allow animals to interact with others of the same species, helping them socialize, share emotional cues, and learn from each other. For example: A dog group, a cat group, or a cow group. Animal owners can track the interactions within these groups through visual or auditory logs or receive notifications when significant emotional changes occur. The animal's emotions are tracked during group interactions. For instance, if a cat seems to become more relaxed in the presence of other cats, the system will note this positive emotional interaction and use it to create their separate group and guide future interactions. It is tracked using the SCS. The system 100 ensures that the emotional states of animals in the group remain balanced and non-distressed, allowing for a harmonious social environment. It is tracked by a Group Cohesion Score (GCS). The explanation for determining the GCS is explained later in the present disclosure.

The inter species social groups are designed to facilitate communication between different species, helping animals to form friendships and learn emotional cues that may improve their coexistence. For example, a dog might respond positively to a cat's purring, which can then be used as a soothing signal for the dog. The system 100 can also ensure that certain species (e.g., horses and goats, or dogs and rabbits) have compatible emotional signals. This interaction data is continuously tracked and analyzed to see how animals of different species respond to each other's emotional cues. Each cross-species group interaction is monitored for emotional impact, helping to identify friendly pairs and potential stressors in mixed-species environments (like farms or multi-pet households). NFC (Near Field Communication) chips or other identification technologies are used to identify which animals form successful emotional bonds, facilitating better grouping in future social interactions.

Successful emotional interactions are stored in the database 108, creating a personalized emotional map for each animal that includes reactions to sounds, actions, and the presence of other animals. When an animal becomes agitated, the system 100 suggests interventions based on these stored interactions. If negative emotional patterns are detected (such as one animal causing another stress through aggressive behavior or constant barking), the system 100 alerts the owner and suggests corrective actions. These could include adjusting interactions between specific animals or introducing calming techniques for the stressed animal. A movement log of the animal is generated, tracking places where the animal was, its respective emotions at those places, and the duration of stay at each place and in each emotional state. This helps the owner understand if certain environments or areas are consistently associated with negative or positive emotions.

The SCS is designed to evaluate the emotional and social dynamics between animals (within species or cross-species) in a structured and quantifiable manner. The SCS score helps track how well animals interact with one another in social groups, and it will be directly useful in identifying harmonious or problematic relationships, guiding owners on optimal groupings.
SCS is calculated as: $SCS = f \left({WS}_{1}∗IF,{WS}_{2}∗PIR,{WS}_{3}∗CI,{WS}_{4}∗{CI}_{x}\right) ∗ ERM$ (1)
where,
*IF* represents Interaction Frequency (Number of interactions per unit time) and is mathematically represented as, $Interaction Frequency \left(IF\right) = \frac{Number of Intreraction in Time Period}{Time Period}$
*PIR* represents Positive Interaction Ratio (Ratio of positive interactions to total interactions, e.g., play, calm posture) and is mathematically represented as, $Positive Interaction Ratio \left(PIR\right) = \frac{Positive Interacitons}{Total Interactions}$
*CI* represents Conflict Incidence (Frequency of negative interactions, e.g., aggression, avoidance) and is mathematically represented as, $Conflict Incidence \left(CI\right) = \frac{Number of Negative Interactions}{Total Interacitons}$
*CIₓ* represents Comfort Index (Stress indicators like heart rate, cortisol during interactions) and is mathematically represented as, $Comfort Index \left(C{I}_{x}\right) = \frac{\sum \left(Stress Indicators during Interaction\right)}{Total Interacitons}$
*ERM* represents Emotional Response Match (Alignment of emotional responses, such as matching levels of relaxation or anxiety between animals) and is mathematically represented as, $Emotional Response Match \left(ERM\right) = \frac{Matching Emotional Responses}{Total Interacitons}$
***WS*₁. *WS*₂, *WS*₃, *WS*₄** are weights that determine the importance of each parameter, based on interacting species of animal. These weights are configured by domain experts and then optimized through reinforcement learning.
As an example, Table 1 shows example values of various metrics for calculating SCS.

**Table 1**

| Metric | Value |
|---|---|
| IF (interactions/hour) | 5 |
| PIR | 0.8 |
| CI | 0.1 |
| CIx | 0.9 |
| ERM | 0.95 |
| Weights | WS₁ = 0.2, WS₂ = 0.3, WS₃ = 0.3, WS₄ = 0.2 |

The value of SCS determined from the above metric values using equation 1 is 1.61. The typical range and interpretation of SCS values are defined as below,
SCS between 0.0 and 0.5 indicates poor emotional compatibility of the animal (frequent stress or aggression),
SCS between 0.5 and 1.0 indicates moderate emotional compatibility of the animal (some tension, manageable),
SCS between 1.0 and 2.0 indicates good emotional compatibility of the animal (mostly positive interactions),
SCS greater than 2.0 indicates excellent emotional compatibility of the animal (strong emotional bonding).

A higher SCS indicates better emotional compatibility and smoother social interactions. And a lower SCS suggests that the animals may have incompatible emotional responses, guiding owners toward interventions.

Further at step 208 of the method 200, one or more hardware processors 102 are configured to determine the group cohesion score (GCS) indicating emotional harmony and cohesion between the plurality of animals (i) in the intra species social group, and (ii) in the inter species social group. The GCS is determined based on a group synchronization index represented using number of synchronized animals, a stress dispersion factor represented using a stress measure for each animal of the plurality of animals and a mean stress level of the plurality of animals, and an engagement rate represented using a count of social behaviors of each animal at a predefined observation time. The GCS measures the emotional harmony and cohesion of a social group of animals, focusing on overall group dynamics, synchronization, and stress dispersion. GCS is calculated as: $GCS = f \left({W}_{G 1}∗GSI,{W}_{G 2}∗SDF,{W}_{G 3}∗ER\right)$ (2) where,
*GSI* represents Group Synchronization Index (degree of behavioral synchronization in activities like resting, moving, grooming) and is mathematically represented as, $Group Synchronization Index \left(GSI\right) = \frac{S}{N}$
where,
   *S* is the number of synchronized animals (animals whose behaviors are aligned, e.g., resting, moving, grooming at the same time),
   *N* is the total number of animals in the group,
*SDF* represents Stress Dispersion Factor (tracks variance in stress levels across individuals; the lower the variance, the better the cohesion), and is mathematically represented as, $Stress Dispersion Factor \left(SDF\right) = \frac{1}{N} {{\sum }_{i = 1}^{N} \left({S}_{i}-\overline{S}\right)}^{2}$
where,
   *Sᵢ* is the stress measure (e.g., cortisol levels, oxytocin levels, etc.) of individual animal *i*.
   *S̅* is the mean stress level of the group.
ER represents Engagement Rate (rate of social behaviors such as play, grooming, and social resting; higher engagement suggests better social harmony), and is mathematically represented as, $Engagement Rate \left(ER\right) = \frac{1}{T} {\sum }_{t = 1}^{T} {\sum }_{i = 1}^{N} Social {Behaviours}_{i} \left(t\right)$
where,
   T is the total observation time,
   *Social Behavioursᵢ*(*t*) is the count of social behaviors (such as grooming, playing, or resting together) of individual i at time t.
*W*_{*G*1}, *W*_{*G*2}, *W*_{*G*3} are weights, configured by domain experts and then optimized through reinforcement learning.
As an example, Table 2 shows example values of various metrics for calculating GCS,

**Table 2**

| Metric | Value |
|---|---|
| GSI | 0.75 |
| SDF | 0.2 |
| ER | 0.6 |
| Weights | W_{G1} = 0.3, W_{G2} = 0.4, W_{G3} = 0.3 |

The value of GCS determined from the above metric values using equation 2 is 0.725. GCS between 0.0 and 0.4 indicates poor group cohesion of the animal (disjointed behavior, stress),
GCS between 0.4 and 0.7 indicates moderate cohesion of the animal (some alignment, occasional stress),
GCS between 0.7 and 1.0 indicates strong cohesion of the animal (harmonious group dynamics).

A higher GCS indicates better group cohesion, implying that the animals within the group interact harmoniously and that the group's emotional well-being is balanced. A lower GCS suggests issues like high stress variability or low social interaction, signaling potential conflict or emotional distress within the group.

Grouping animals into the same species social group and inter species social group is done online and offline. In an online scenario, animals are grouped based on location data of animals, emotional compatibility, and resilience scores. The system 100 gets the owner's location to group animals within close geographical proximity. Real-time data on behavioral signals, physiological markers, and interaction patterns is collected to ensure animals in online groups share similar emotional states. Then groups are monitored continuously using SCS to improve grouping. Grouping offline will focus on the SCS based on interactions. This includes evaluating interaction frequency (IF), positive interaction ratio (PIR), conflict incidence (CI), and emotional response match (ERM). Each animal in (i) the intra species social group, and (ii) the inter species social group is continuously assessed to refine the set of speech responses based on a success or a failure utilizing the SCS, the movement log of each animal and the GCS.

Once the GCS is determined, at step 210 of the method 200, one or more hardware processors 102 are configured to generate a resilience score for each of the plurality of animals in (i) the intra species social group, and (ii) the inter species social group indicating an ability of each animal to recover from negative emotion. The resilience score is generated utilizing (i) a recovery time indicating time required for each animal to return to a predefined emotion, (ii) a response strength depending on at least one speech response amongst the set of speech responses which causes an emotion of each animal to return to the predefined emotion, (iii) a number of speech responses required for the emotion of each animal to return to the predefined emotion, and (iv) a number of negative emotions experienced by each animal. The resilience score is calculated for each animal, where the system 100 monitors the animal's ability to recover from stress. Based on past emotional fluctuations and their ability to return to baseline states or the predefined emotional states, the system 100 assesses and generates resilience scores. This score can be used to predict how the animal may react to future stressors. $Resilience Score = f \left(\frac{1}{RT}, RS, \frac{1}{NR}, \frac{1}{1 + {N}_{neg}}\right)$ where,
Recovery Time (RT) is the time it takes for the animal's emotional state to return to baseline or a predefined comfortable emotional level (e.g., calm or neutral).
**Response strength** (RS) depends on which speech response is caused by an animal's emotional state to return to baseline or a predefined comfortable emotional level. Response strength gets a value from different responses. These responses values are based on type of emotion.
For example, if emotion is tertiary negative emotion, values of response are as follows,
   Audio of animal (other species): 1.0
   Audio of animal (same sex, same species): 0.8
   Audio of animal (opposite sex, same species): 0.6
   Audio of caretaker: 0.5
   Caretaker dummy with audio: 0.4
   Actual caretaker presence: 0.2
If emotion is primary negative emotion, values of response are as follows,
   Audio of animal (other species): 1.0
   Audio of animal (same sex, same species): 1.0
   Audio of animal (opposite sex, same species): 1.0
   Audio of caretaker: 0.8
   Caretaker dummy with audio: 0.6
   Actual caretaker presence: 0.4
**Number of** Responses (NR) is the number of speech responses needed for animal's emotional state to return to baseline,
*N_{neg}* is the number of negative emotions experienced by the animal in a day. High number of negative emotions in a day indicates that the animal experiences emotional distress frequently. It suggests that the animal is less equipped to cope with emotional stressors. Low number of negative emotions implies the animal is generally more stable and resilient, as it experiences fewer emotional disruptions.

A high resilience score closer to 1 indicates that the animal has a quick recovery, responds well to interventions, and resumes normal behaviors quickly after stress. A low resilience score closer to 0 suggests that the animal struggles with recovery, may require more time and interventions, or does not return to normal behavior easily.

Once determining the resilience score, at step 212 of the method 200, one or more hardware processors 102 are configured to generate a set of predefined insights for each animal in (i) the intra species social group, and (ii) the inter species social group based on the resilience score. The system 100 tracks an animal's emotional evolution and resilience score over time, identifying fluctuations in mood, energy, and stress levels. This allows the system 100 to identify patterns of emotional highs and lows. Based on these emotional trends, the system 100 generates a tailored/ personalized well-being care plans or pre-defined insights. These plans might include suggestions for intervention at specific times or after specific emotional triggers (e.g., Your cow is experiencing high levels of stress in the evenings. Try providing comfort at 6 PM daily). Owners receive actionable insights, such as adjusting their daily routines or introducing certain comforting activities or sounds to reduce stress. This involves suggesting responses which worked for an individual animal. Also based on resilience score, a response strength is defined for the individual animal.

In multi-animal households or farms, when compatible animal groups are created and allowed to socialize within groups, GCS is tracked to balance the emotion of group. If an animal begins to exhibit negative emotions, the response involves ensuring that other animals are not disturbed and calming the distressed animal. If the animal remains unsettled, it is then isolated and given a personalized response protocol tailored to its needs. If the animal's mood indicates a potential emotional or health issue (e.g., persistent anxiety or stress-induced concerns), the system 100 provides diagnostic insights and suggests interventions. These may include seeking veterinary care, adjusting the environment, modifying social interactions, or implementing treatment protocols like calming routines, training techniques, or new interaction patterns to address and alleviate the underlying cause of distress.

### EXPERIMENTAL RESULTS:

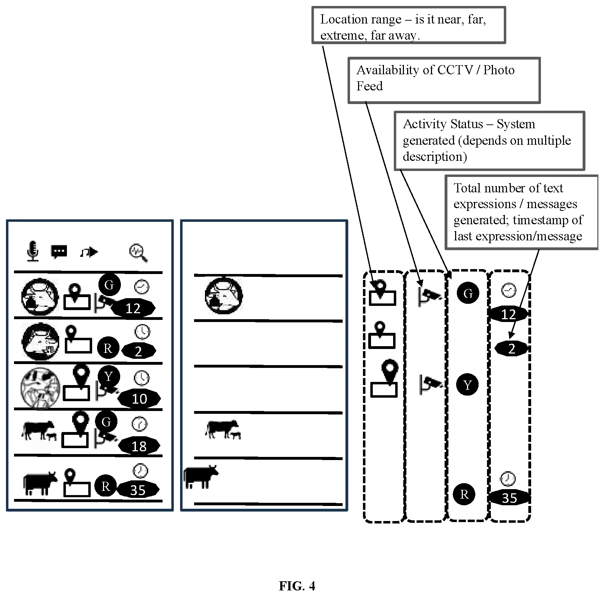

Few examples of the screen design of user interface of the system 100, showing the social networking of animals of same species and animals of different species with explanation are provided henceforth. FIG. 4 illustrates an example user interface design in the system 100 showing a social network of animals according to some embodiments of the present disclosure. In the figure, different icons are provided, where,
a) location range provides ground positioning system (GPS) (or any other location tracking mechanism) tracking location of each animal and calculating the animal distance from shed.
b) availability of CCTV / photo feed provides camera icon showing whether image/video feed is available for each animal.
c) Green (G), Yellow (Y), Red (R) icons provide the activity status of each animal. The activity status for each animal is determined from audio data, video data, physiological data, and environmental data G icon means all stipulated activities as per animal management protocol are taken care of, and animal is within safe zone, etc. Y icon means except for a few management activities (e.g., less feed taken, water timing missed/delayed) and/or animal is out of safe zone, but reachable. R icon means the majority of the activities (e.g., 8 out of 10) are not recorded or missing. Animals have been detected to get out of yellow zones. It is to be understood by a person having ordinary skill in the art or a person skilled in the art that R, Y, and G are exemplary symbolic representations, and such representations shall not be construed as limiting the scope of the present disclosure. In other words, any other representation techniques to indicate various activities/statuses of the animals being monitored can be utilized by the system 100 and the method of the present disclosure.

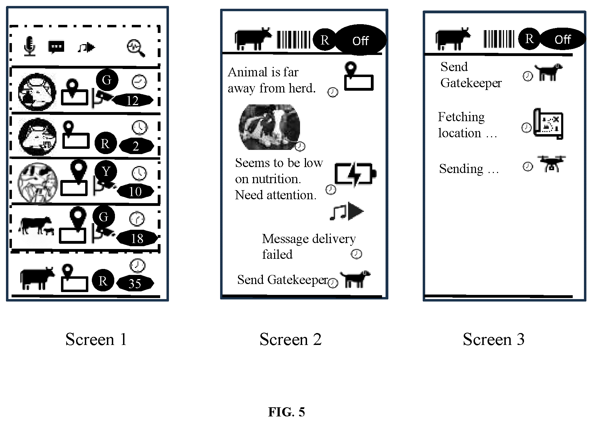

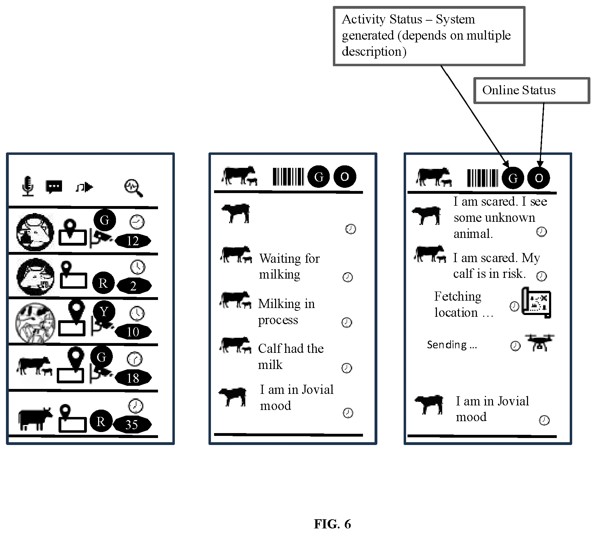

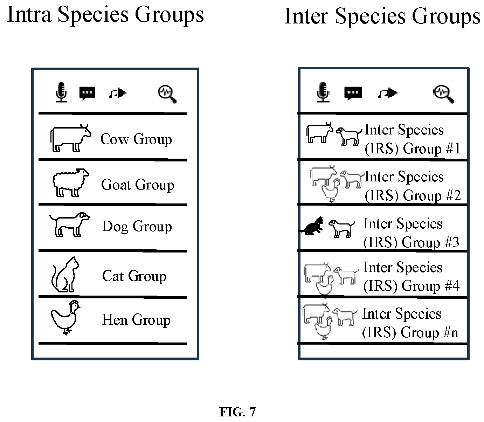

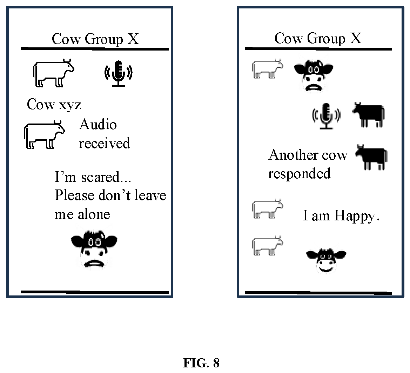

FIG. 5 illustrates an example user interface of the system 100 showing red activity monitoring of the animal according to some embodiments of the present disclosure. Red activity is where R icon is displayed in the user interface indicating majority of the activities of the animal (e.g., 8 out of 10) are not recorded or missing. In the figure, screen 1 shows clicked on last animal to view text expressions received from that animal. Screen 2 and screen 3 show all text expressions from animal and/or messages generated by the system 100 for selected animal. It shows message delivery failure which means response to animal is provided. However, it is not understood by the animal and/or animal has not come to negative or positive emotion state or not recovered. The screens show a scanning symbol which means robot scans the animal to identify the animal. The Send Gatekeeper (Robot, UAV, etc.) option is provided to the owner or caretaker for selection thereof. If the owner has not responded, the system 100 takes action to send the gatekeeper. Fetching Location option means the system 100 fetches all the data including location and sends the gatekeeper. The icon O is Online which means animal (ID / transporter) signal is received, so communication is possible. The icon Off is Offline which means animal might have strayed out of communication network. FIG. 6 illustrates an example user interface of the system 100 showing a calf and mother interaction according to some embodiments of the present disclosure. FIG. 7 illustrates an example user interface of the system 100 showing the intra species group and the inter species group according to some embodiments of the present disclosure. FIG. 8 illustrates an example user interface of the system 100 showing intra species group of cows with text responses according to some embodiments of the present disclosure. GenAI models like GPT-4, Text-to-Text Transfer Transformer (T5), Bidirectional Encoder Representations from Transformers (BERT) were used during experimentation. Though GPT-4, Text-to-Text Transfer Transformer (T5), Bidirectional Encoder Representations from Transformers (BERT) models were used only for experimental purposes, any suitable GenAI model can be used to achieve the desired results.

Few use case examples for the disclosed system 100 are provided herewith,
Use case1: A pet dog exhibits signs of anxiety whenever its owner leaves the house. The system 100 detects this anxiety in real-time via physiological data (e.g., heart rate) and audio (e.g., barking). It then triggers a pre-recorded calming message in the voice of the dog's owner, alongside relaxing music. Over time, the system 100 learns which types of responses work best and adapts based on the dog's emotional history.
Use Case 2: A farm monitoring system detects signs of distress in cows, specifically around 6 PM every day. The system 100 triggers soothing cow sounds based on the emotional patterns learned from the cows. This reduces their stress, leading to improved behavior and productivity in the herd.
   Cows are social animals, and the behavior of one cow can influence the behavior of others in the herd. Below are the observations noted during a controlled experiment done among the herd,
   (a) Delayed feed leads to the increased vocalization, increased steps and potential signs of stress which can create a ripple effect, causing other cows to become agitated or exhibit stress behaviors themselves. Some cows will also make occasional vocalization to support "companionship". Stressed cows remain standing more frequently than they would if they were calm. Some animals may also remain standing to support the cow under stress. After feed is given, cow returns to happy emotion, i.e. stress is reduced and it is observed improved behaviors such as cow stopping vocalizing, sat down, etc.
   (b) Similar behavior is seen in the cattle under heat (estrus), when they try to mount on other animals and animals would not sit to avoid issues. Behavioral changes have an adverse effect on milk production and less milk would be observed in stressed condition.
Few practical applications of the disclosed method are provided herewith,
**Veterinary and Pet Care:** Animal care facilities and veterinary clinics can use this system 100 to monitor pets and animals for signs of distress, stress, or behavioral issues, providing personalized interventions that improve patient outcomes.
**Farm Management:** Livestock farms can use the system 100 to monitor the emotional well-being of cows, pigs, and other farm animals, reducing stress-induced behaviors and improving productivity and health.
**Animal Shelters:** Shelters can use this system 100 to help monitor and assess the emotional states of animals awaiting adoption, ensuring that animals are calm and well-adjusted before being placed in homes.
**Zoos and Wildlife Conservation:** Zoos can apply this disclosed method to ensure the emotional well-being of captive animals, fostering better socialization and reducing stress in enclosures.
**Pet Owners:** Pet owners can monitor their pets' emotional health in real-time, receive feedback on emotional trends, and automatically trigger responses like calming sounds or messages.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
determining, via one or more hardware processors, an emotion of an animal from a multimodal input data captured using a plurality of sensors, using a trained Graph Neural Network (GNN)-transformer model, wherein the multimodal input data comprises an audio data, a video data, and an Internet of Things (IoT) data comprising a physiological data and an environmental data (202);
generating, via the one or more hardware processors, a set of speech responses by converting a plurality of contextual text responses obtained based on (i) the emotion of the animal, (ii) a profile corresponding to the animal, (iii) a species specific communication data obtained from an experimental data, (iv) the environmental data, and (v) a response data from (a) other animals and (b) owners of other animals, using a Generative Artificial Intelligence (GenAI) model to record an interaction of the animal comprising at least (i) a positive interaction, or (ii) a negative interaction (204);
determining, via the one or more hardware processors, a Social Compatibility Score (SCS) indicating one or more emotional-social dynamics between a plurality of animals in (i) an intra species social group, and (ii) an inter species social group, over a predefined time period based on a number of interactions of the plurality of animals, a number of positive interactions of the plurality of animals, a number of negative interactions of the plurality of animals, a number of emotional match responses, and one or more stress indicators during interactions (206);
determining, via the one or more hardware processors, a Group Cohesion Score (GCS) indicating an emotional harmony and a cohesion between the plurality of animals (i) in the intra species social group, and (ii) in the inter species social group based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time (208);
generating, via the one or more hardware processors, a resilience score for each animal amongst the plurality of animals in (i) the intra species social group, and (ii) the inter species social group indicating an ability of each animal to recover from a negative emotion (210); and
generating, via the one or more hardware processors, a set of predefined insights for each animal in (i) the intra species social group, and (ii) the inter species social group based on the resilience score (212).

2. The processor implemented method as claimed in claim 1, wherein the step of generating the set of speech responses for the animal is preceded by,
generating, via the one or more hardware processors, a personalized expression along with an emoticon associated with the emotion using the GenAI model; and
generating, via the one or more hardware processors, a mood of the animal corresponding to the personalized expression from the emotion using a deep learning model indicating the mood of the day of the animal.

3. The processor implemented method as claimed in claim 1, wherein generating the set of speech responses comprises,
converting iteratively, via the one or more hardware processors, the plurality of contextual text responses via a speech synthesis to generate the set of speech responses in an order until the animal attains a calm emotion or a last speech response amongst the set of speech responses is generated;
repeating, via the one or more hardware processors, the set of speech responses as one of (i) a predefined time-based repetition, or (ii) a predefined emotional pattern-based repetition, based on an emotional history of the animal; and
recording, via the one or more hardware processors, the interaction of the animal after each repetition of the set of speech responses.

4. The processor implemented method as claimed in claim 1, wherein each animal in (i) the intra species social group, and (ii) the inter species social group is continuously assessed to refine the set of speech responses based on a success or a failure utilizing the SCS, a movement log of each animal and the GCS.

5. The processor implemented method as claimed in claim 1, wherein the resilience score for each animal is determined utilizing (i) a recovery time indicating a time required for each animal to return to a predefined emotion, (ii) a response strength depending on at least one speech response amongst the set of speech responses which causes the emotion of each animal to return to the predefined emotion, (iii) a number of speech responses required for the emotion of each animal to return to the predefined emotion, and (iv) a number of negative emotions experienced by each animal.

6. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
determine an emotion of an animal from a multimodal input data captured using a plurality of sensors, using a trained graph neural network (GNN)-transformer model, wherein the multimodal input data comprises an audio data, a video data, and an Internet of Things (IoT) data comprising a physiological data and an environmental data;
generate a set of speech responses by converting a plurality of contextual text responses obtained based on (i) the emotion of the animal, (ii) a profile corresponding to the animal, (iii) a species specific communication data obtained from an experimental data, (iv) the environmental data, and (v) a response data from (a) other animals and (b) owners of other animals, using a Generative Artificial Intelligence (GenAI) model to record an interaction of the animal comprising at least (i) a positive interaction, or (ii) a negative interaction;
determine a Social Compatibility Score (SCS) indicating one or more emotional-social dynamics between a plurality of animals in (i) an intra species social group, and (ii) an inter species social group, over a predefined time period based on a number of interactions of the plurality of animals, a number of positive interactions of the plurality of animals, a number of negative interactions of the plurality of animals, a number of emotional match responses, and one or more stress indicators during interactions;
determine a Group Cohesion Score (GCS) indicating an emotional harmony and a cohesion between the plurality of animals (i) in the intra species social group, and (ii) in the inter species social group based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time;
generate a resilience score for each animal amongst the plurality of animals in (i) the intra species social group, and (ii) the inter species social group indicating ability of each animal to recover from a negative emotion; and
generate a set of predefined insights for each animal in (i) the intra species social group, and (ii) the inter species social group based on the resilience score.

7. The system as claimed in claim 6, wherein the step of generating the set of speech responses for the animal is preceded by,
generate a personalized expression along with an emoticon associated with the emotion using the GenAI model; and
generate a mood of the animal corresponding to the personalized expression from the emotion using a deep learning model indicating the mood of the day of the animal.

8. The system as claimed in claim 6, wherein generating the set of speech responses comprises,
convert iteratively the plurality of contextual text responses via a speech synthesis to generate the set of speech responses in an order until the animal attains a calm emotion or a last speech response amongst the set of speech responses is generated;
repeat the set of speech responses as one of (i) a predefined time based repetition, or (ii) a predefined emotional pattern based repetition, based on an emotional history of the animal; and
record the interaction of the animal after each repetition of the set of speech responses.

9. The system as claimed in claim 6, wherein each animal in (i) the intra species social group, and (ii) the inter species social group is continuously assessed to refine the set of speech responses based on a success or a failure utilizing the SCS, a movement log of each animal and the GCS.

10. The system as claimed in claim 6, wherein the resilience score for each animal is determined utilizing (i) a recovery time indicating a time required for each animal to return to a predefined emotion, (ii) a response strength depending on at least one speech response amongst the set of speech responses which causes the emotion of each animal to return to the predefined emotion, (iii) a number of speech responses required for the emotion of each animal to return to the predefined emotion, and (iv) a number of negative emotions experienced by each animal.

11. One or more non-transitory machine-readable information storage mediums comprising one or more instructions which when executed by one or more hardware processors cause:
determining an emotion of an animal from a multimodal input data captured using a plurality of sensors, using a trained Graph Neural Network (GNN)-transformer model, wherein the multimodal input data comprises an audio data, a video data, and an Internet of Things (IoT) data comprising a physiological data and an environmental data;
generating a set of speech responses by converting a plurality of contextual text responses obtained based on (i) the emotion of the animal, (ii) a profile corresponding to the animal, (iii) a species specific communication data obtained from an experimental data, (iv) the environmental data, and (v) a response data from (a) other animals and (b) owners of other animals, using a Generative Artificial Intelligence (GenAI) model to record an interaction of the animal comprising at least (i) a positive interaction, or (ii) a negative interaction;
determining a Social Compatibility Score (SCS) indicating one or more emotional-social dynamics between a plurality of animals in (i) an intra species social group, and (ii) an inter species social group, over a predefined time period based on a number of interactions of the plurality of animals, a number of positive interactions of the plurality of animals, a number of negative interactions of the plurality of animals, a number of emotional match responses, and one or more stress indicators during interactions;
determining a Group Cohesion Score (GCS) indicating an emotional harmony and a cohesion between the plurality of animals (i) in the intra species social group, and (ii) in the inter species social group based on a group synchronization index represented using a number of synchronized animals, a stress dispersion factor represented using a stress measure for each animal of the plurality of animals and a mean stress level of the plurality of animals, and an engagement rate represented using a count of social behaviors of each animal at a predefined observation time;
generating a resilience score for each animal amongst the plurality of animals in (i) the intra species social group, and (ii) the inter species social group indicating an ability of each animal to recover from a negative emotion; and
generating a set of predefined insights for each animal in (i) the intra species social group, and (ii) the inter species social group based on the resilience score.

12. The one or more non-transitory machine-readable information storage mediums as claimed in claim 11, wherein the step of generating the set of speech responses for the animal is preceded by,
generating a personalized expression along with an emoticon associated with the emotion using the GenAI model; and
generating a mood of the animal corresponding to the personalized expression from the emotion using a deep learning model indicating the mood of the day of the animal.

13. The one or more non-transitory machine-readable information storage mediums as claimed in claim 11, wherein generating the set of speech responses comprises,
converting iteratively the plurality of contextual text responses, via a speech synthesis, to generate the set of speech responses in an order until the animal attains a calm emotion or a last speech response amongst the set of speech responses is generated;
repeating the set of speech responses as one of (i) a predefined time-based repetition, or (ii) a predefined emotional pattern-based repetition, based on an emotional history of the animal; and
recording the interaction of the animal after each repetition of the set of speech responses.

14. The one or more non-transitory machine-readable information storage mediums as claimed in claim 11, wherein each animal in (i) the intra species social group, and (ii) the inter species social group is continuously assessed to refine the set of speech responses based on a success or a failure utilizing the SCS, a movement log of each animal and the GCS.

15. The one or more non-transitory machine-readable information storage mediums as claimed in claim 11, wherein the resilience score for each animal is determined utilizing (i) a recovery time indicating a time required for each animal to return to a predefined emotion, (ii) a response strength depending on at least one speech response amongst the set of speech responses which causes the emotion of each animal to return to the predefined emotion, (iii) a number of speech responses required for the emotion of each animal to return to the predefined emotion, and (iv) a number of negative emotions experienced by each animal.
